# EUROPEAN PATENT APPLICATION

(11) **EP 2 555 116 A1**
(43) Date of publication of application: **06.02.2013**
(21) Application number: 10848848.7
(22) Date of filing: 31.03.2010
(51) Int. Cl.: G06F 11/20, G06F 15/177

(54) **MULTI-CLUSTER SYSTEM**

(71) Applicant: Fujitsu Limited, Kawasaki-shi, Kanagawa 211-8588 (JP)
(72) Inventor: SANO, Koji, Kawasaki-shi Kanagawa 211-8588 (JP)
(74) Representative: HOFFMANN EITLE
(86) International application number: PCT/JP2010/002375
(87) International publication number: WO 2011/121666

(57) **Abstract**

A multi-cluster system includes a plurality of computers; and a plurality of system storage apparatuses each of which is coupled to the plurality of computers; wherein at least one of the plurality of system storage apparatuses includes a first circuit that detects a connection information that includes connection-failure information indicating a connection failure in a connection with at least one of the plurality of computers, and a second circuit that reports the connection information detected by the first circuit to the plurality of computers; and each of the plurality of computers includes a third circuit that receives the connection information from each of the plurality of system storage apparatuses, and a fourth circuit that executes processing to disconnect a system storage apparatus, based on the connection information received by the third circuit.

## Description

### TECHNICAL FIELD

The embodiments discussed herein are related to a multi-cluster system and an information processing system.

### BACKGROUND ART

A multi-cluster system is constituted by a plurality of computers, that is, a plurality of clusters. In the multi-cluster system, for example, system storage apparatuses shared by the plurality of clusters are used to execute database processing. The clusters and the system storage apparatuses are coupled through, for example, electrically conductive cables or optical cables.

For redundancy, the same data is stored in the system storage apparatuses. Thus, even when one of the system storage apparatuses fails, another system storage apparatus may be used instead. The use of the other system storage apparatus allows the entire multi-cluster system to operate continuously. The system storage apparatuses hold the same data in order to guarantee the equivalence.

Each system storage apparatus has connection-state flags indicating the states of logical connections with each clusters and uses the connection-state flags may be used to determine the states of logical connections between each cluster and the system storage apparatus. The operational state between the clusters is checked, for example, through packet communication performed between the clusters at given intervals. Packet communication between clusters is mutually performed via a system storage apparatus. When a connection failure occurs on a path between the clusters that disables packet communication between the clusters, one of the clusters logically disconnects the path for a cluster from which a non-operational state has been detected that runs through the system storage apparatus. The system storage apparatus from which the path has been logically disconnected may be unable to hold the same data as the data in the other system storage apparatuses, since the cluster connection configuration is different from that of another system storage apparatus.

The clusters, which use the redundant system storage apparatuses check, as part of status monitoring, the operational-state between the clusters. The checks are performed at given intervals via the system storage apparatus that operates as a master, and are performed using the operating system (OS). A disconnected cluster whose path with the system storage apparatus has been disconnected is unable to check the operational state of the another cluster that was connected to the disconnected cluster via the disconnected system storage apparatus. A cluster whose operational state is unable to be confirmed is disconnected from the multi-cluster system. The situation in which a cluster is disconnected may be referred to as a "cluster down". When a cluster down occurs, the number of clusters that execute processing decreases which may cause a problem in that the processing of the entire multi-cluster system is delayed.

Disclosed examples of related art include Japanese Laid-open Patent Publication No. 5-46580 and Japanese Laid-open Patent Publication No. 4-23149.

### DISCLOSURE OF THE INVENTION

### PROBLEM TO BE SOLVED BY THE INVENTION

In view of the foregoing, it is an object of the present embodiment to provide a multi-cluster system in which the connections of clusters are maintained when a system storage apparatus from which a connection failure is detected is disconnected.

### MEANS OF SOLVING THE PROBLEM

According to an aspect of the invention, an apparatus includes a plurality of computers; and a plurality of system storage apparatuses each of which is coupled to the plurality of computers; wherein at least one of the plurality of system storage apparatuses includes a first circuit that detects a connection information that includes connection-failure information indicating a connection failure in a connection with at least one of the plurality of computers, and a second circuit that reports the connection information detected by the first circuit to the plurality of computers; and each of the plurality of computers includes a third circuit that receives the connection information from each of the plurality of system storage apparatuses, and a fourth circuit that executes processing to disconnect a system storage apparatus, based on the connection information received by the third circuit.

### EFFECTS OF THE INVENTION

According to the multi-cluster system and the information processing system, the connections of clusters are maintained when a system storage apparatus from which a connection failure is detected is disconnected.

### BRIEF DESCRIPTION OF THE DRAWINGS

FIG. 1 is a block diagram illustrating one example of a multi-cluster system according to a first embodiment;

FIG. 2 is a block diagram illustrating one example of the multi-cluster system according to the first embodiment;

FIG. 3 is a block diagram illustrating a portion of the internal configuration of an interface circuit in the first embodiment;

FIG. 4 is a block diagram illustrating a portion of the internal configuration of the interface circuit in the first embodiment;

FIG. 5 is a sequence diagram illustrating one example of operation of the multi-cluster system according to the first embodiment;

FIG. 6 is a sequence diagram illustrating one example of the operation of the multi-cluster system according to the first embodiment;

FIG. 7 is a timing diagram illustrating one example of communication instruction processing of the multi-cluster system according to the first embodiment;

FIG. 8 is a timing diagram illustrating one example of the communication instruction processing of the multi-cluster system according to the first embodiment;

FIG. 9 is a timing diagram illustrating one example of the communication instruction processing of the multi-cluster system according to the first embodiment; and

FIG. 10 is a sequence diagram illustrating one example of operation of a multi-cluster system according to a second embodiment.

### DESCRIPTION OF THE REFERENCE NUMERALS

11, 12, 21, 22 connection line
100, 200 system storage apparatus (SSD)
110, 210, 310, 410 interface circuit (INTF)
110A1, 110A2, 210A1, 210A2, 310A1, 310A2, 410A1, 410A2 failure-detection reporting circuit
120, 220 system-configuration control circuit
120A1, 120A2, 220A1, 220A2 connection-state flag
130, 230 priority control circuit (PRIO)
130A, 230A interface-failure reporting circuit
300, 400 cluster
310B, 410B connection-state receiving circuit
310C, 410C issuing circuit
320, 420 system storage transfer unit (SSTU)
340, 440 system controller (SC)
1000 multi-cluster system

### BEST MODE OF CARRYING OUT THE INVENTION

A multi-cluster system 1000 according to first and second embodiments of the present technology and a control method for the multi-cluster system 1000 are described below. The present technology, however, is not limited to the disclosed embodiments.

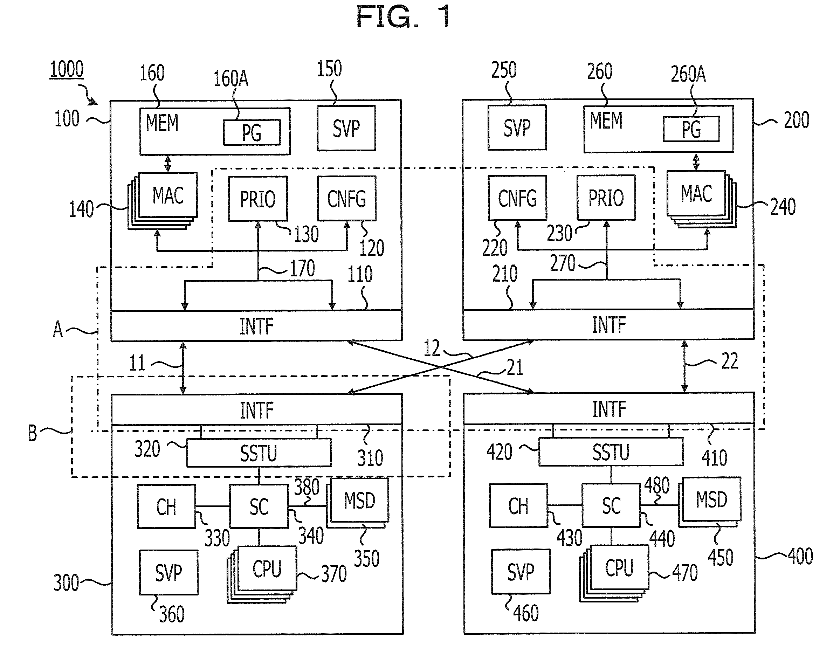

The multi-cluster system 1000 according to a first embodiment and a control method for the multi-cluster system 1000 are described below with reference to FIGs. 1 to 9.

FIG. 1 is a block diagram that gives an overview of the multi-cluster system 1000 according to the first embodiment. The multi-cluster system 1000 includes system storage apparatuses (SSD) 100 and 200, clusters 300 and 400, and connection lines 11, 12, 21, and 22. The system storage apparatuses 100 and 200 have substantially the same configuration. In the system storage apparatus 200, elements that are similar to those in the system storage apparatus 100 are denoted by the same reference numerals, and description thereof is omitted. The clusters 300 and 400 have substantially the same configuration. In the cluster 400, elements that are similar to those in the cluster 300 are denoted by the same reference numerals, and description thereof is omitted.

The connection lines 11, 12, 21, and 22 may be implemented by, for example, electrically conductive cables or optical cables. The system storage apparatus 100 and the cluster 300 are coupled through the connection line 11. The system storage apparatus 100 and the cluster 400 are coupled through the connection line 21. The system storage apparatus 200 and the cluster 300 are coupled through the connection line 12. The system storage apparatus 200 and the cluster 400 are coupled through the connection line 22. The clusters 300 and 400 perform processing to read data stored in the system storage apparatuses 100 and 200 and to write data to the system storage apparatuses 100 and 200.

The system storage apparatus 100 includes an interface circuit (INTF) 110, a system-configuration control circuit (CNFG) 120, a priority control circuit (PRIO) 130, a plurality of multiple memory access controllers (MAC) 140, a service processor (SVP) 150, a memory (MEM) 160, and a bus 170. The interface circuit 110, the system-configuration control circuit 120, the priority control circuit 130, the memory access controllers 140, and the memory 160 are interconnected through the bus 170.

The communication system 100 is made redundant with the system storage apparatus 200 in order to guarantee that no data stored in the communication system 100 is corrupted or lost. The system storage apparatus 100 stores therein data and programs that are the same as data and programs stored in the system storage apparatus 200. The system storage apparatus 100 is coupled to the clusters 300 and 400 through the connection lines 11 and 21 so as to be shared by the clusters 300 and 400. The system storage apparatus 100 bridges a connection between the clusters 300 and 400 that are both coupled to the system storage apparatus 100.

The interface circuit 110 is provided in order to connect the system storage apparatus 100 to the clusters 300 and 400. The interface circuit 110 analyzes packets that are transmitted from the clusters 300 and 400 and are received therefrom and transmits commands and data to the system-configuration control circuit 120 and the priority control circuit 130. The interface circuit 110 sets which of the clusters 300 and 400 is to access the commands and data with higher priority. The interface circuit 110 receives packetized commands and data from the clusters 300 and 400 and also transmits packetized commands and data to the clusters 300 and 400.

The system-configuration control circuit 120 analyzes the commands that are transmitted from the clusters 300 and 400 and are received via the interface circuit 110 and sets a configuration of the system storage apparatus 100 in accordance with the analyzed commands.

The priority control circuit 130 controls access to the memory access controller 140. The priority control circuit 130 reports an access priority order to the memory access controller 140.

In accordance with the access priority order reported by the priority control circuit 130, the memory access controller 140 controls access to the memory 160.

The service processor 150 performs, for example, system control that involves control of the operation and maintenance diagnostics of the multi-cluster system 1000. The service processor 150 has, for example, an operator console function.

The memory 160 temporarily stores therein, for example, at least part of data used by the clusters 300 and 400 as well as an OS program and a computation program (PG) 160A executed by the clusters 300 and 400. The computation program 160A is a program for performing computation processing in the first embodiment. When the cluster 300 or 400 goes down or becomes unusable because of a connection failure, the backup cluster 400 or 300 coupled to the system storage apparatuses 100 and 200 executes the processing of the computation program 160A.

The computation program 160A may desirably be stored in the memory 160 or may desirably not be stored in the memory 160. The computation program 160A may be stored on a portable physical storage medium inserted into the system storage apparatus 100. Examples of the storage medium include a floppy disk (FD), a CD-ROM (compact disc read only memory), an magneto-optical disc (MO), a digital versatile disc (DVD), and an integrated circuit (IC) card. The computation program 160A may also be stored on a disk device that is provided inside or outside the system storage apparatus 100 or a storage medium in another computer (server) that is coupled to the system storage apparatus 100 through a public line, the Internet, a local area network (LAN), or a wide area network (WAN). The system storage apparatus 100 may read and execute the computation program 160A from the storage medium.

The system storage apparatus 200 includes an interface circuit 210, a system-configuration control circuit 220, a priority control circuit 230, a plurality of memory access controllers 240, a service processor 250, a memory 260, and a bus 270. The interface circuit 210, the system-configuration control circuit 220, the priority control circuit 230, the memory access controllers 240, and the memory 260 are interconnected through the bus 270.

The system storage apparatus 200 is made redundant with the system storage apparatus 100 in order to guarantee that no data stored in the system storage apparatus 200 is corrupted or lost. The system storage apparatus 200 stores therein the same data and programs as those in the system storage apparatus 100. The system storage apparatus 200 is coupled to the clusters 300 and 400 through the connection lines 12 and 22 so as to be shared by the clusters 300 and 400. The system storage apparatus 200 bridges a connection between the clusters 300 and 400 that are coupled to the system storage apparatus 200.

The cluster 300 includes an interface circuit 310, a system storage transfer unit (SSTU) 320, a channel device (CH) 330, a system controller (SC) 340, a main storage device (MSD) 350, a service processor 360, central processing units (CPUs) 370, and a bus 380. The interface circuit 310, the system storage transfer unit 320, the channel device 330, the system controller 340, the main storage device 350, and the CPUs 370 are interconnected through the bus 380.

The interface circuit 310 is provided for the cluster 300 to connect to the system storage apparatuses 100 and 200. The interface circuit 310 analyzes received packets that are transmitted from the system storage apparatuses 100 and 200 as well as transfers data or transfers a response to an instruction for the system storage transfer unit 320. The interface circuit 310 sets an access priority order for commands and data for the system storage transfer unit 320. The interface circuit 310 packetizes the commands and data received from the system storage transfer unit 320 and transmits the packetized commands and data to the system storage apparatuses 100 and 200.

The system storage transfer unit 320 controls data transfer between the interface circuit 310 and the main storage device 350. The system storage transfer unit 320 controls communication with the cluster 400 that is coupled via the interface circuit 310 and the interface circuit 210 in the system storage apparatus 200.

The channel device 330 reads data from the main storage device 350 via the system storage transfer unit 320 and transfers the data to the CPUs 370.

The system controller 340 controls data transfer among the system storage transfer unit 320, the channel device 330, the main storage device 350, and the CPUs 370.

In response to a request from the system storage transfer unit 320 and the CPUs 370, the main storage device 350 stores and holds data. The main storage device 350 is, for example, a random access memory (RAM).

Similarly to the service processor 150 in the system storage apparatus 100, the service processor 360 performs system control that involves control of the operation and maintenance diagnostics of the multi-cluster system 1000.

The CPUs 370 execute computation processing for the cluster 300. The CPUs 370 control the system storage transfer unit 320, the channel device 330, the system controller 340, and the main storage device 350.

The cluster 400 includes an interface circuit 410, a system storage transfer unit 420, a channel device 430, a system controller 440, a main storage device 450, a service processor 460, CPUs 470, and a bus 480. The interface circuit 410, the system storage transfer unit 420, the channel device 430, the system controller 440, the main storage device 450, and the CPUs 470 are interconnected through the bus 480.

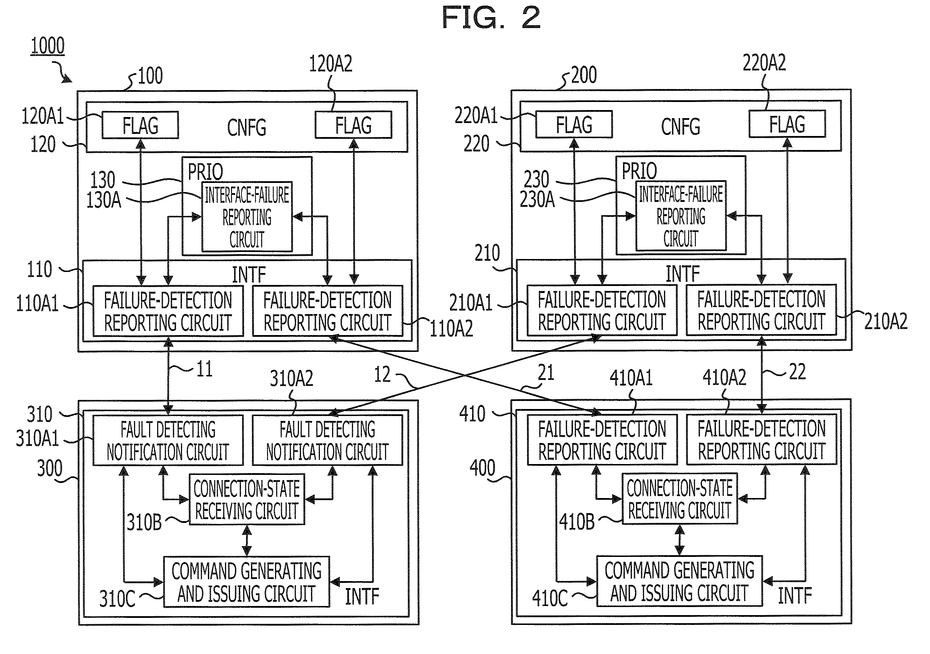

FIG. 2 is a block diagram illustrating the configuration of a portion A (indicated by a dashed-dotted line) in the multi-cluster system 1000 illustrated in FIG. 1. In the multi-cluster system 1000 illustrated in FIG. 2, elements that are similar to those illustrated in FIG. 1 are denoted by the same reference numerals and description thereof is omitted.

In the following description, it is assumed that the system storage apparatus 100 operates as a master and the system storage apparatus 200 operates as a slave. The system storage apparatus 100 that operates as the master operates as a working apparatus.

The interface circuit 110 in the system storage apparatus 100 includes failure-detection reporting circuits 110A1 and 110A2. The failure-detection reporting circuit 110A1 is coupled to a failure-detection reporting circuit 310A1, provided in the cluster 300, through the connection line 11. The failure-detection reporting circuit 110A2 is coupled to a failure-detection reporting circuit 410A1, provided in the cluster 400, through the connection line 21.

Each of the failure-detection reporting circuits 110A1 and 110A2 provided in the interface circuit 110 in the system storage apparatus 100 detects a connection failure between the system storage apparatus 100 and the corresponding cluster. More specifically, the failure-detection reporting circuit 110A1 receives connection-failure information reported from the cluster 300 and the failure-detection reporting circuit 110A2 receives connection-failure information reported from the cluster 400. Each of the failure-detection reporting circuits 110A1 and 110A2 also analyzes and checks packets transmitted to the corresponding clusters 300 and 400, so that the interface circuit 110 detects a connection failure in the connections with the clusters 300 and 400. Even if the result of error checking data received from the cluster indicates that the data check revealed no problems, there are cases in which a connection failure occurs on a path before the data is input to the system storage apparatus 100. Thus, the failure-detection reporting circuits 110A1 and 110A2 detect, as a connection failure in the interface circuit 110, any connection failure that occurs on the path before the data is input to the system storage apparatus 100.

The system-configuration control circuit 120 in the system storage apparatus 100 has a region for storing connection-state flags 120A1 and 120A2. The connection-state flag 120A1 is a flag indicating the state of the logical connection between the cluster 300 and the system storage apparatus 100, with an on state for the flag indicating a good connection. The connection-state flag 120A1 is turned off when the failure-detection reporting circuit 110A1 detects a connection failure between the cluster 300 and the system storage apparatus 100. The connection-state flag 120A2 is a flag indicating the state of logical connection between the cluster 400 and the system storage apparatus 100. The connection-state flag 120A2 is turned off when the failure-detection reporting circuit 110A2 detects a connection failure between the cluster 400 and the system storage apparatus 100. When one of the connection-state flags 120A1 and 120A2 is turned off, the system-configuration control circuit 120 logically breaks the connection with the corresponding cluster 300 or 400.

The priority control circuit 130 in the system storage apparatus 100 includes an interface-failure reporting circuit 130A. The interface-failure reporting circuit 130A is coupled to the failure-detection reporting circuits 110A1 and 110A2. For example, when a connection failure in the connection with the cluster 300 is reported from the failure-detection reporting circuit 110A1 to the interface-failure reporting circuit 130A, the interface-failure reporting circuit 130A reports the connection failure, received from the failure-detection reporting circuit 110A1, to the failure-detection reporting circuit 110A2 that is coupled to the cluster 400.

Since the functions of the elements provided in the system storage apparatus 200 are basically the same as the functions of the elements provided in the system storage apparatus 100, detailed description thereof is omitted.

The interface circuit 310 in the cluster 300 includes the failure-detection reporting circuit 310A1, a failure-detection reporting circuit 310A2, a connection-state receiving circuit 310B, and a command generating and issuing circuit 310C.

The failure-detection reporting circuit 310A1 is coupled to the failure-detection reporting circuit 110A1, which is provided in the system storage apparatus 100, through the connection line 11. The failure-detection reporting circuit 310A2 is coupled to the failure-detection reporting circuit 210A1, which is provided in the system storage apparatus 200, through the connection line 12.

Each of the failure-detection reporting circuits 310A1 and 310A2 detects a connection failure in the connection with the corresponding connected system storage apparatus 100 or 200. More specifically, the failure-detection reporting circuit 310A1 receives connection-failure information from the system storage apparatus 100 and the failure-detection reporting circuit 310A2 receives connection-failure information from the system storage apparatus 200. Each of the failure-detection reporting circuits 310A1 and 310A2 also analyzes and checks packets, which are transmitted from the corresponding system storage apparatus 100 or 200, to detect a connection failure in the connection with the corresponding system storage apparatus 100 or 200. Even when the data check indicates no problems, there are cases in which a connection failure occurs on the path before the data is input to the cluster 300. Thus, the failure-detection reporting circuits 310A1 and 310A2 detect, as a connection failure in the interface circuit 310, any connection failure that occurs on the path before the data is input to the system storage apparatus 300.

The connection-state receiving circuit 310B receives, from the failure-detection reporting circuit 310A1 or 310A2, connection information that indicates the connection state of the connection with the corresponding system storage apparatus 100 or 200. The connection information received from the failure-detection reporting circuit 310A1 or 310A2, which is provided in the interface circuit 310 and has detected the connection failure in the connection with the corresponding system storage apparatus 100 or 200 includes information that indicates the connection failure. When a connection failure in connection with the system storage apparatus 100 or 200 occurs, the connection-state receiving circuit 310B receives connection information from the failure-detection reporting circuit that detected the connection failure and the connection information from the failure detecting reporting circuit that did not detected a connection failure.

When a connection failure in the connection with a system storage apparatus 100 or 200 is reported from the corresponding failure-detection reporting circuit 310A1 or 310A2, the connection-state receiving circuit 310B determines whether or not equivalence between the system storage apparatuses 100 and 200 coupled to the cluster 300 is guaranteed, based on the connection state of the connection between the other system storage apparatus 200 or 100 from which no connection failure is detected, and the cluster 300.

When the other system storage apparatus from which no connection failure is detected is not logically connected to the cluster 300, the connection-state receiving circuit 310B determines that the same data and programs are stored in both of the system storage apparatus from which the connection failure is detected and the other system storage apparatus. That is, the connection-state receiving circuit 310B determines that equivalence between the system storage apparatus from which the connection failure has been detected and the other system storage apparatus is guaranteed.

On the other hand, when the other system storage apparatus from which no connection failure is detected is logically connected to the cluster 300, the connection-state receiving circuit 310B determines that the same data and programs as those in the other system storage apparatus are not stored in the system storage apparatus from which the connection failure is detected. That is, the connection-state receiving circuit 310B determines that the equivalence between the system storage apparatus from which the connection failure has been detected and the other system storage apparatus is not guaranteed.

The connection-state receiving circuit 310B reports the result of the determination to the command generating and issuing circuit 310C as reception information.

Based on the reception information obtained from the connection-state receiving circuit 310B, the command generating and issuing circuit 310C generates and issues a request command for disconnecting the system storage apparatus from the cluster 300. More specifically, the command generating and issuing circuit 310C issues a request command for disconnecting the corresponding system storage apparatus from, of the failure-detection reporting circuits 310A1 and 310A2, the failure-detection reporting circuit that detected a connection failure in the connection with the corresponding system storage apparatus. The request command may be implemented by, for example, a packetized command and data.

The interface circuit 410 in the cluster 400 includes failure-detection reporting circuits 410A1 and 410A2, a connection-state receiving circuit 410B, and a command generating and issuing circuit 410C. Since the basic functions of the elements in the cluster 400 are similar to the functions of the elements in the cluster 300, detailed description thereof is omitted.

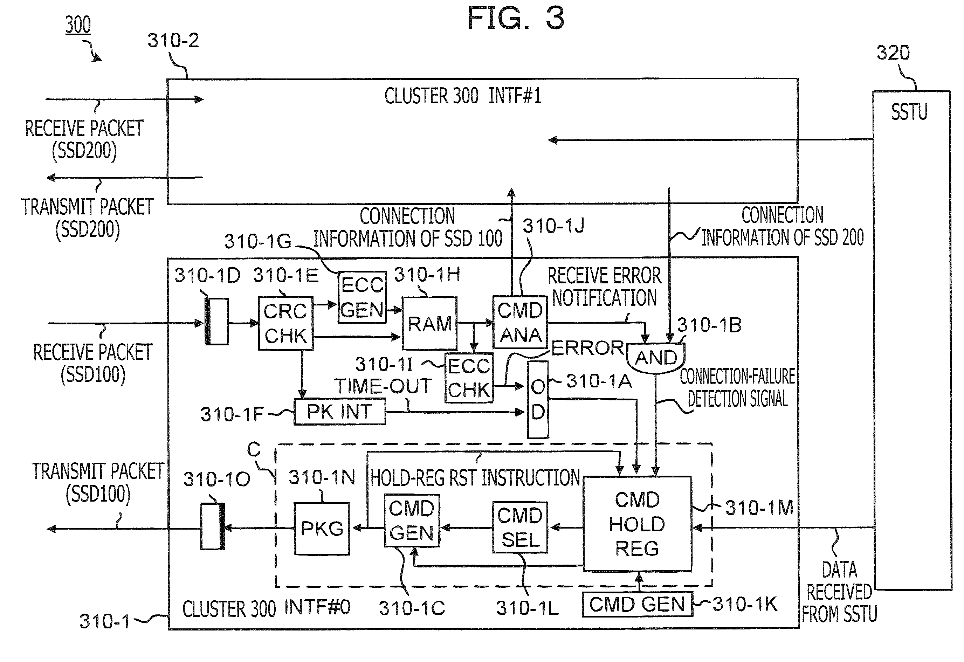

FIG. 3 is a block diagram illustrating the configuration of the interface circuit 310 and the system storage transfer unit 320 at a portion B (indicated by a dashed line) in the cluster 300 illustrated in FIG. 1. In the multi-cluster system 1000 illustrated in FIG. 3, elements that are similar to those illustrated in FIG. 1 are denoted by the same reference numerals and description thereof is omitted.

The interface circuit 310 includes an interface circuit 310-1 for the system storage apparatus 100 and an interface circuit 310-2 for the system storage apparatus 200.

The interface circuit 310-1 includes a failure-detection reporting circuit 310-1A, a connection-state receiving circuit 310-1B, a command generating and issuing circuit (CMD GEN) 310-1C, a flip-flop 310-1D, a cyclic-redundancy checking circuit (CRC CHK) 310-1E, a packet-interval monitoring circuit (PK INT) 310-1F, an error-correction code generating circuit (ECC GEN) 310-1G, a random access memory 310-1H, an error-correction code checking circuit (ECC CHK) 310-1I, a command analyzing circuit (CMD ANA) 310-1J, a command generating circuit (CMD GEN) 310-1K, a command priority selecting circuit (CMD SEL) 310-1L, a command holding register circuit (CMD HOLD REG) 310-1M, a packet generating circuit (PKG) 310-1N, and a flip-flop 310-10.

The failure-detection reporting circuit 310-1A illustrated in FIG. 3 and the failure-detection reporting circuits 310A1 and 310A2 illustrated in FIG. 2 may be the same elements. The connection-state receiving circuit 310-1B illustrated in FIG. 3 and connection-state receiving circuits 310B1 and 310B2 illustrated in FIG. 2 may be the same elements. The command generating and issuing circuit 310-1C illustrated in FIG. 3 and command generating and issuing circuits 310C1 and 310C2 illustrated in FIG. 2 may be the same elements.

The flip-flop 310-1D receives data packets transferred from the system storage apparatus 100 and transmits the data packets to the cyclic-redundancy checking circuit 310-1E. The data packets contain connection information about the connection between the system storage apparatus 100 and the cluster 300. When the system storage apparatus 100 detects a connection failure, the system storage apparatus 100 transmits packets containing failure-detection information.

Based on the packets transferred from the flip-flop 310-1D, the cyclic-redundancy checking circuit 310-1E executes error detection, for example, a cyclic redundancy check (CRC), for detecting error in the packets. Thereafter, the cyclic-redundancy checking circuit 310-1E sends the packets to the RAM 310-1H, the packet-interval monitoring circuit 310-1F and the error-correction code generating circuit 310-1G.

The packet-interval monitoring circuit 310-1F monitors communication intervals of the transferred packets. When no packets are received for a certain amount of time, the packet-interval monitoring circuit 310-1F sends a connection-failure notification to the failure-detection reporting circuit 310-1A.

When a code error in the data occurs, the error-correction code generating circuit 310-1G generates an error correction code that is to be attached to the data and sends the error correction code to the RAM 310-1H.

The data checked by the cyclic-redundancy checking circuit 310-1E and a error correction code generated by the error-correction code generating circuit 310-1G are written to the RAM 310-1H. The information written to the RAM 310-1H is sent to the error-correction code checking circuit 310-1I and the command analyzing circuit 310-1J.

When a code error in the data occurs, the error-correction code checking circuit 310-1I sends a connection-failure notification to the failure-detection reporting circuit 310-1A.

The command analyzing circuit 310-1J analyzes commands received from the RAM 310-1H. The command analyzing circuit 310-1J sends, to the interface circuit 310-2 that is for the system storage apparatus 200, connection information about the connection between the system storage apparatus 100 and the cluster 300, the connection information being obtained as a result of the command analysis. When the command analyzing circuit 310-1J determines that connection failure has occurred, the command analyzing circuit 310-1J sends a message that indicates a connection failure between the system storage apparatus 100 and the cluster 300, that is, error information, to the connection-state receiving circuit 310-1B.

The connection-state receiving circuit 310-1B may receive both a message indicating a connection failure between the system storage apparatus 100 and the cluster 300, the connection failure message being sent from the command analyzing circuit 310-1J, as well as the connection information about the connection between the system storage apparatus 200 and the cluster 300, the connection information being sent from the interface circuit 310-2 for the system storage apparatus 200. Upon receiving a message indicating connection failure reported from the system storage apparatus 100 and the connection information reported from the system storage apparatus 200 via the interface circuit 310-2, the connection-state receiving circuit 310-1B determines that the system storage apparatuses 100 and 200 do not hold the same data. When the system storage apparatuses 100 and 200 do not hold the same data, the equivalence between the system storage apparatuses 100 and 200 is not guaranteed. That is, the system storage apparatus 100 may determine that the equivalence between the system storage apparatus 100 and the system storage apparatus 200 is not guaranteed. When the equivalence between the system storage apparatuses 100 and 200 is not guaranteed, the connection-state receiving circuit 310-1B sends a connection-failure detection signal for the system storage apparatus 100 to the command holding register circuit 310-1M.

The failure-detection reporting circuit 310-1A may receive a notification indicating a 2-bit error in data read from the RAM 310-1H, the 2-bit error notification being sent from the error-correction code checking circuit 310-1I, and a notification indicating a packet-communication-interval timeout error detected by the packet-interval monitoring circuit 310-1F. Upon receiving notification of a 2-bit error or a timeout error, the failure-detection reporting circuit 310-1A sends a command to the command generating and issuing circuit 310-1C. The command sent to the command generating and issuing circuit 310-1C includes notification of the connection failure between the system storage apparatus 100 and the cluster 300. The command sent to the command generating and issuing circuit 310-1C is also held in the failure-detection reporting circuit 310-1A.

The command generating circuit 310-1K generates various commands used for the transfer of data and packets to and from the system storage apparatus 100. The commands generated by the command generating circuit 310-1K are sent to the command holding register circuit 310-1M and are held therein.

The command holding register circuit 310-1M may hold a disconnect command sent from the connection-state receiving circuit 310-1B. If a disconnect command is held, the command holding register circuit 310-1M also holds information regarding the system storage apparatus to be disconnected. The command holding register circuit 310-1M holds the commands including the connection failure between the system storage apparatus 100 and the cluster 300, the connection information being received from the failure-detection reporting circuit 310-1A. The command holding register circuit 310-1M holds the data received from the system storage transfer unit 320. In response to a reset instruction from the command generating and issuing circuit 310-1C, the command holding register circuit 310-1M resets a register in which the generated commands are held. The command holding register circuit 310-1M sends the held commands and instructions to the command priority selecting circuit 310-1L.

The command priority selecting circuit 310-1L selects a command to be given priority from the commands held by the command holding register circuit 310-1M. For example, the command priority selecting circuit 310-1L selects the command for disconnecting the system storage apparatus, the command being held by the command holding register circuit 310-1M. The command priority selecting circuit 310-1L sends the selected command to the command generating and issuing circuit 310-1C.

The command generating and issuing circuit 310-1C selects data used for executing the command selected by the command priority selecting circuit 310-1L and sends the selected data to the packet generating circuit 310-1N. When the command priority selecting circuit 310-1L selects a command for disconnecting the system storage apparatus, the command generating and issuing circuit 310-1C selects the data used for executing the command for disconnecting the system storage apparatus, the command being selected by the command priority selecting circuit 310-1L. The command generating and issuing circuit 310-1C then sends the selected data to the packet generating circuit 310-1N. After generating the data used for disconnecting the system storage apparatus, the command generating and issuing circuit 310-1C sends, to the command holding register circuit 310-1M, an instruction for resetting the holding of the commands in the command holding register circuit 310-1M.

The packet generating circuit 310-1N generates packets based on the data used for disconnecting the system storage apparatus 100, the data being sent from the command generating and issuing circuit 310-1C. The packet generating circuit 310-1N sends the generated packets to the flip-flop 310-10.

The flip-flop 310-1O receives the packets from the packet generating circuit 310-1N. The packets contain disconnect information for disconnecting the system storage apparatus 100 and the cluster 300. The flip-flop 310-10 transmits, to the system storage apparatus 100, packets for disconnecting the system storage apparatus 100 and the cluster 300.

The interface circuit 310-2 transmits and receives packets to and from the system storage apparatus 200. The interface circuit 310-2 has substantially the same configuration as the configuration of the interface circuit 310-1.

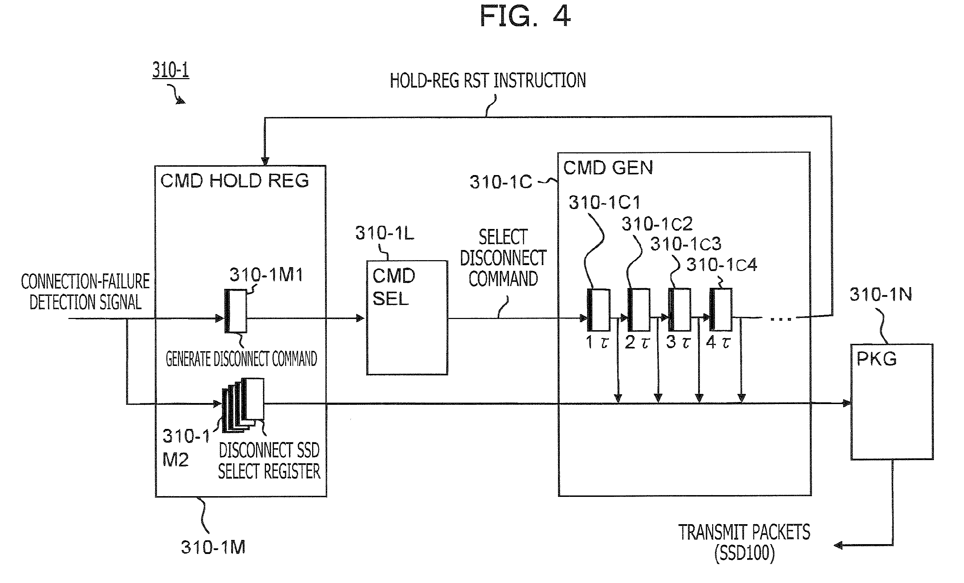

FIG. 4 is a block diagram illustrating the interface circuit 310-1 at a portion C (indicated by a dashed line) in the interface circuit 310-1 illustrated in FIG. 3. That is, FIG. 4 illustrates the command holding register circuit 310-1M, the command priority selecting circuit 310-1L, the command generating and issuing circuit 310-1C, and the packet generating circuit 310-1N in the interface circuit 310-1. In the interface circuit 310-1 illustrated in FIG. 4, elements that are similar to those illustrated in FIG. 3 are denoted by the same reference numerals and descriptions thereof is omitted.

The command holding register circuit 310-1M includes a disconnect-command generating circuit 310-1M1 and a disconnection selection register circuit 310-1M2.

Upon receiving a connection-failure detection signal from the connection-state receiving circuit 310-1B, the disconnect-command generating circuit 310-1M1 generates a command for disconnecting the system storage apparatus 100 from the cluster 300 and 400. The disconnect-command generating circuit 310-1M1 sends the generated command to the command priority selecting circuit 310-1L.

Upon receiving a connection-failure detection signal from the connection-state receiving circuit 310-1B, the disconnection selection register circuit 310-1M2 generates a selection command for selecting the system storage apparatus to be disconnected from the cluster 300. The disconnection selection register circuit 310-1M2 sends the generated selection command to the command generating and issuing circuit 310-1C.

The command generating and issuing circuit 310-1C includes timing shift registers 310-1C1 to 310-1C4.

The timing shift registers 310-1C1 to 310-1C4 include, for example, flip-flops. The timing shift registers 310-1C1 to 310-1C4 receive, from the command priority selecting circuit 310-1L, a command for disconnecting the system storage apparatus to be disconnected. The timing shift registers 310-1C1 to 310-1C4 generate, for example, data used for selecting the system storage apparatus to be disconnected and data used for selecting a disconnection portion of the system storage apparatus 100.

After generating the data, the command generating and issuing circuit 310-1C sends, to the command holding register circuit 310-1M, a reset instruction that instructs the resetting of commands held thereby. The command generating and issuing circuit 310-1C selects, from the timing shift registers 310-1C1 to 310-1C4, the data used when executing the command for disconnecting the system storage apparatus. The data used for executing the command is selected from the timing shift registers 310-1C1 to 310-1C4 at an arbitrary timing. The command generating and issuing circuit 310-1C sends the selected data to the packet generating circuit 310-1N.

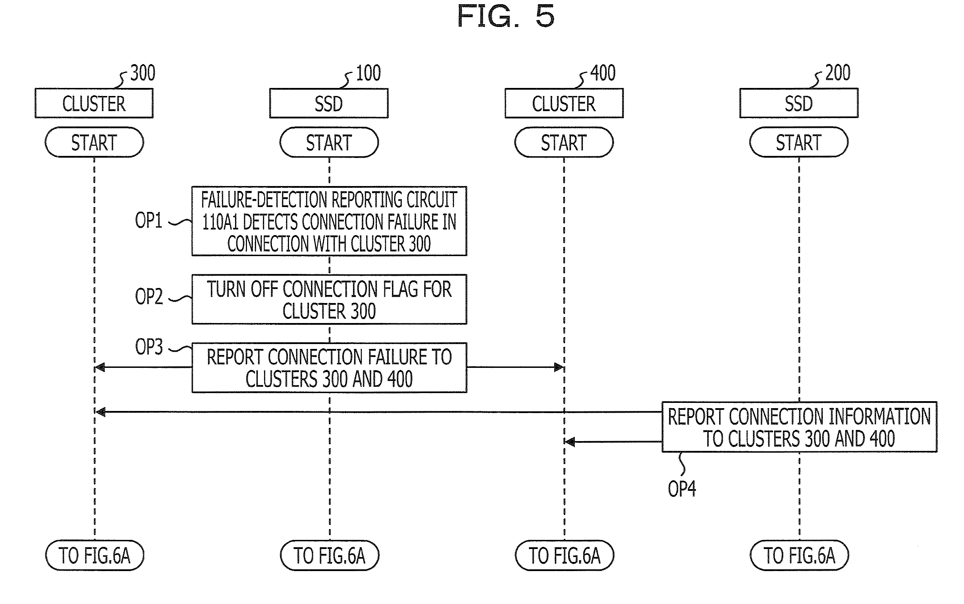

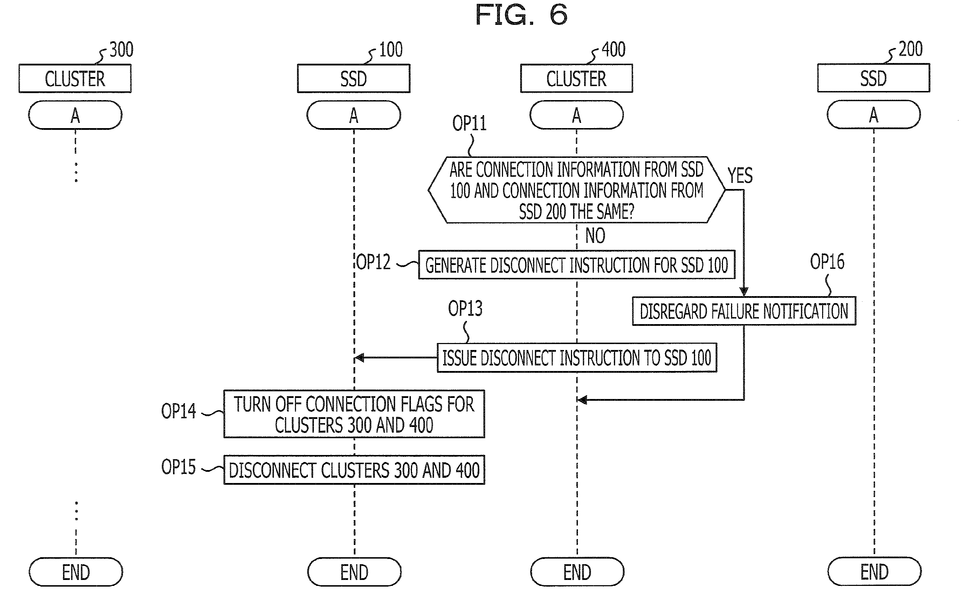

FIGs. 5 and 6 are sequence diagrams illustrating an example of operation of the multi-cluster system 1000 according to the first embodiment. The processing illustrated in FIG. 5 continues to A in FIG. 6. The processing illustrated in FIGs. 5 and 6 is performed when, for example, the failure-detection reporting circuit 110A1 in the system storage apparatus 100 detects a connection failure between the system storage apparatus 100 and the cluster 300. In the example displayed in FIGs. 5 and 6, it is also assumed that the system storage apparatus 100 operates as a master and the system storage apparatus 200 operates as a slave.

As illustrated in FIG. 5, the system storage apparatus 100, using the failure-detection reporting circuit 110A1, detects a connection failure in the connection with the cluster 300 (OP1).

Upon the detection of the state of the connection with the cluster 300, the system storage apparatus 100 uses the system-configuration control circuit 120 to turn off the connection-state flag for the cluster 300 (OP2).

The system storage apparatus 100 uses the priority control circuit 130 to report, to the clusters 300 and 400, connection information that includes connection-failure information indicating that the connection failure occurred between the system storage apparatus 100 and the cluster 300 (OP3). Processing described below is performed between the system storage apparatus 100 and the cluster 400.

The system storage apparatus 200 also reports connection information to both of the connected clusters 300 and 400 (OP4). When the system storage apparatus 200 has not detected a connection failure in the connection with the connected clusters 300 and 400, the connection information reported from the system storage apparatus 200 to the clusters 300 and 400 does not include information indicating a connection failure.

The cluster 400 receives, via the interface circuit 410, connection information transmitted from the system storage apparatus 100 and connection information transmitted from the system storage apparatus 200. The connection-state receiving circuit 4100 in the interface circuit 410 refers to the connection information, transmitted from the system storage apparatus 100, and the connection information, transmitted from the system storage apparatus 200, and determines whether or not the connection information received from any of the system storage apparatuses includes the connection-failure information. When the connection information received from one of the system storage apparatuses 100 or 200 includes connection-failure information, the connection-state receiving circuit 410B refers to the connection information, received from the other system storage apparatus, to determine the state of the logical connection between the other system storage apparatus and the cluster 400 (OP11). When the connection information transmitted from the system storage apparatus 100 includes connection-failure information and the determination made at OP11 based on the connection information of the system storage apparatus 200 indicates the cluster 400 and the system storage apparatus 200 are logically connected with each other, the cluster 400 performs processing at OP12.

The cluster 400 uses the command generating and issuing circuit 410C to generate a disconnect instruction for the system storage apparatus 100 (OP12).

The cluster 400 uses the command generating and issuing circuit 410C to issue the generated disconnect instruction to the system storage apparatus 100 (OP13).

The failure-detection reporting circuit 110A2 in the system storage apparatus 100 receives, from the cluster 400, the disconnect instruction for the system storage apparatus 100.

Similarly to the cluster 400, the cluster 300 also generates a disconnect instruction for the system storage apparatus 100, based on the connection information received from each system storage apparatus. However, since a connection failure has occurred between the cluster 300 and the system storage apparatus 100, the system storage apparatus 100 is unable to receive the disconnect instruction from the cluster 300.

The system storage apparatus 100 receives the disconnect instruction from the cluster 400 and then uses the failure-detection reporting circuit 110A1 to turn off the connection-state flags for all the connected clusters 300 and 400. In this example, the failure-detection reporting circuit 110A1 turns off the connection-state flags 120A1 and 120A2 (OP14).

The system storage apparatus 100 logically disconnects the clusters 300 and 400 from the system storage apparatus 100 (OP15).

When the result of the determination made at OP11 in FIG. 6, based on the connection information of the system storage apparatuses 100 and 200, indicates that the system storage apparatus 200 is not logically connected to the cluster 400, the cluster 400 disregards the failure notification received from the system storage apparatus 100 (OP16).

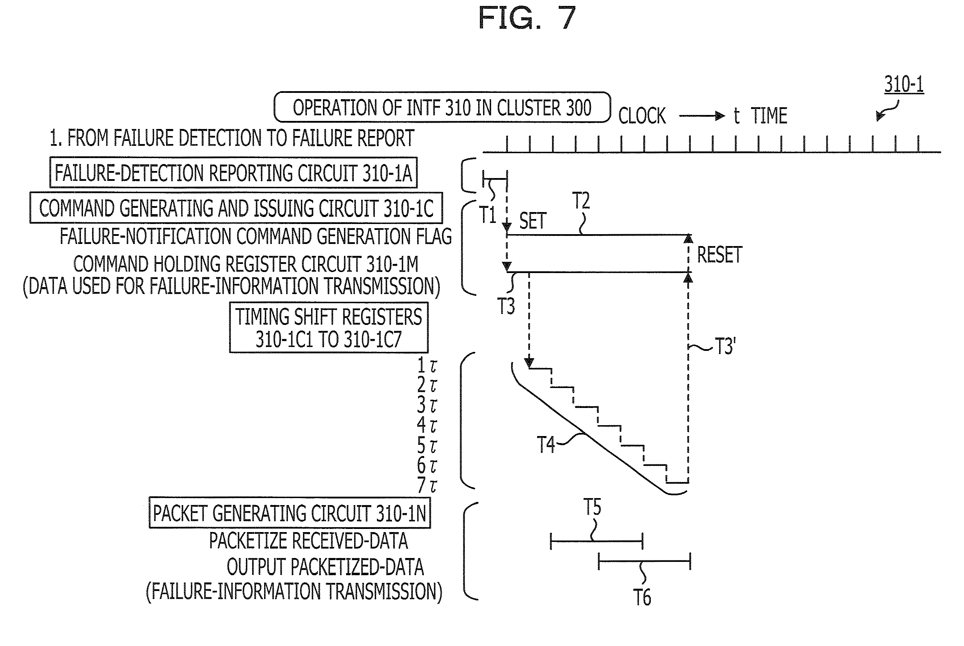

FIGs. 7 to 9 are timing diagrams illustrating one example of communication instruction processing of the multi-cluster system 1000 according to the first embodiment. The horizontal axes illustrated in FIGs. 7 to 9 denote time t. Each increment along the horizontal axes represents one clock cycle. The processing illustrated in FIGs. 7 to 9 is performed to detect a connection failure between the system storage apparatus 100 and the cluster 300.

FIG. 7 is a timing diagram illustrating one example of communication instruction processing of the interface circuit 310 in the cluster 300.

As illustrated in FIG. 7, the failure-detection reporting circuit 310-1A detects a connection failure between the system storage apparatus 100 and the cluster 300 (T1).

The command generating and issuing circuit 310-1C starts generating a failure-notification command generation flag (T2).

The command generating and issuing circuit 310-1C sends a command to the command holding register circuit 310-1M (T3). After sending the command to the command holding register circuit 310-1M, the command generating and issuing circuit 310-1C sends a command-holding reset instruction (T3'). While generating the failure-notification command generation flag, the command generating and issuing circuit 310-1C does not select any other command.

The timing shift registers 310-1C1 to 310-1C7 send, to the packet generating circuit 310-1N, only data used for disconnecting the selected system storage apparatus 100 (T4).

The packet generating circuit 310-1N receives the data from the command generating and issuing circuit 310-1C and packetizes the received data (T5).

The packet generating circuit 310-1N outputs the packetized data (T6). The packet generating circuit 310-1N adds data used for packet transfer to the input data and transmits the resulting data to the system storage apparatus 100.

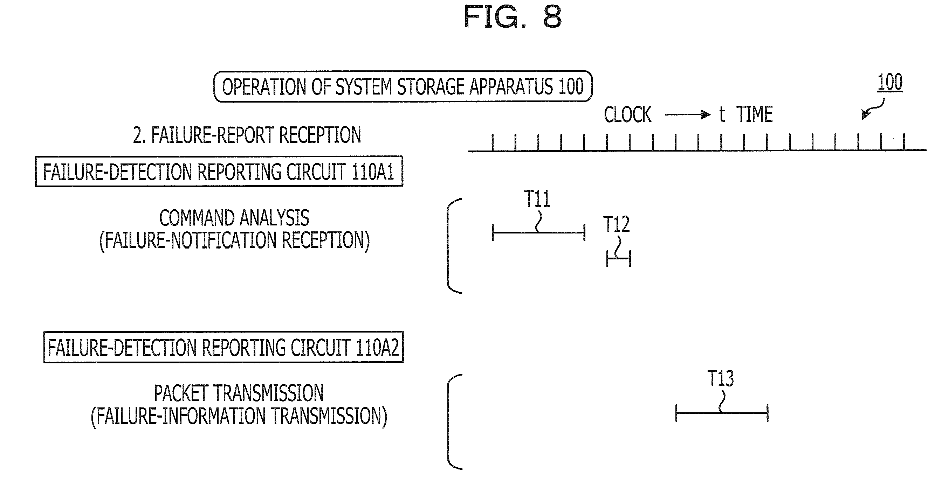

FIG. 8 is a timing diagram illustrating one example of communication instruction processing performed at the failure-detection reporting circuits 110A1 and 110A2 in the system storage apparatus 100. FIG. 8 illustrates processing when the failure-detection reporting circuit 110A2 in the system storage apparatus 100 starts receiving data that includes failure detection information from the failure-detection reporting circuit 310A1 in the cluster 300. The failure-detection reporting circuit 110A1 in the system storage apparatus 100 communicates with the failure-detection reporting circuit 310A1 in the cluster 300. The failure-detection reporting circuit 110A2 in the system storage apparatus 100 communicates with the failure-detection reporting circuit 410A1 in the cluster 400.

The failure-detection reporting circuit 110A1 performs command analysis on the input data received from the cluster 300 (T11). The input data includes the failure detection information about the link between the failure-detection reporting circuit 310A1 in the cluster 300 and the failure-detection reporting circuit 110A1 in the system storage apparatus 100.

After performing the command analysis, the failure-detection reporting circuit 110A1 sends the information indicating a connection failure to the other failure-detection reporting circuit 110A2 in the system storage apparatus 100 via the interface-failure reporting circuit 130A (T12).

The failure-detection reporting circuit 110A2 receives the information indicating a connection failure from the failure-detection reporting circuit 110A1. Thereafter, the failure-detection reporting circuit 110A2 transmits, to the cluster 400, information indicating that a connection failure has been detected between the system storage apparatus 100 and the cluster 300 (T13).

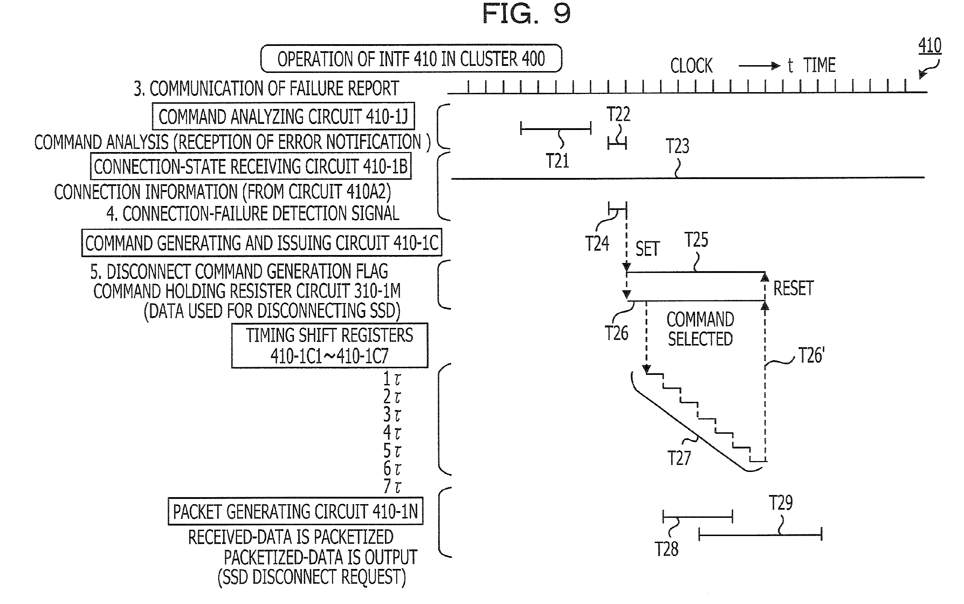

FIG. 9 is a timing diagram illustrating one example of communication instruction processing of the interface circuit 410 in the cluster 400. FIG. 9 illustrates processing when data that includes the failure detection information for the failure-detection reporting circuit 410A2 in the cluster 400 is received from the failure-detection reporting circuit 110A2 in the system storage apparatus 100. The failure-detection reporting circuit 410A1 in the cluster 400 communicates with the failure-detection reporting circuit 110A2 in the system storage apparatus 100. Since the configuration of the interface circuit 410 in the cluster 400 is similar to the configuration of the interface circuit 310 in the cluster 300 illustrated in FIGs. 2 to 4, a description thereof is omitted.

As illustrated in FIG. 9, the command analyzing circuit 410-1J analyzes the input data received from the system storage apparatus 100 (T21). The input data includes the failure detection information about the link between the failure-detection reporting circuit 310A1 in the cluster 300 and the failure-detection reporting circuit 110A1 in the system storage apparatus 100.

The command analyzing circuit 410-1J receives the data from the system storage apparatus 100. The command analyzing circuit 410-1J analyzes the information that indicates a connection failure between the system storage apparatus 100 and the cluster 300 (T22).

The connection-state receiving circuit 410-1B receives, from the failure-detection reporting circuit 410A2, the connection information about the connection between the system storage apparatus 200 and the cluster 400 (T23).

The connection-state receiving circuit 410-1B receives the connection information that includes information about the connection failure between the system storage apparatus 100 and the cluster 300, the connection information being sent from the command analyzing circuit 410-1J, and the connection information about the connection between the system storage apparatus 200 and the cluster 400, the connection information being reported from the failure-detection reporting circuit 410A2. When a determination that is made based on the pieces of connection information indicates that the equivalence between the system storage apparatuses 100 and 200 is not guaranteed, the connection-state receiving circuit 410-1B sends connection information that includes information about the connection failure of the system storage apparatus 100 to the command holding register circuit 410-1M (T24).

The command generating and issuing circuit 410-1C sets the failure-notification command generation flag based on the connection information received from the connection-state receiving circuit 410-1B (T25).

The command generating and issuing circuit 410-1C sends a command to the command holding register circuit 410-1M (T26). After sending the command to the command holding register circuit 410-1M, the command generating and issuing circuit 410-1C sends a command-holding reset instruction (T26'). While the failure-notification command generation flag is set, the command generating and issuing circuit 410-1C does not select any other command.

The timing shift registers 410-1C1 to 410-1C7 send, to the packet generating circuit 410-1N, only data that is used for disconnecting the selected system storage apparatus 100 (T27).

The packet generating circuit 410-1N receives the data from the command generating and issuing circuit 410-1C and packetizes the received data (T28).

The packet generating circuit 410-1N outputs the packetized data (T28). The packet generating circuit 410-1N adds data used for packet transfer to the input data and transmits the resulting data to the system storage apparatus 100. The system storage apparatus 100 is disconnected from the clusters 300 and 400.

According to the multi-cluster system 1000 in the first embodiment and the control method for the multi-cluster system 1000, the cluster 400 may disconnect the system storage apparatus 100 based on the connection information that includes the connection failure reported from the system storage apparatus 100 and the connection information reported from the system storage apparatus 200. Accordingly, it is possible to disconnect the system storage apparatus 100 from which the connection failure is detected, while maintaining the state in which the clusters 300 and 400 are connected with the system storage apparatus 200. In addition, since the disconnection of the cluster 300 may be inhibited to suppress a reduction in the number of clusters that execute the processing, the amount of delay in the overall processing of the multi-cluster system 1000 may be reduced.

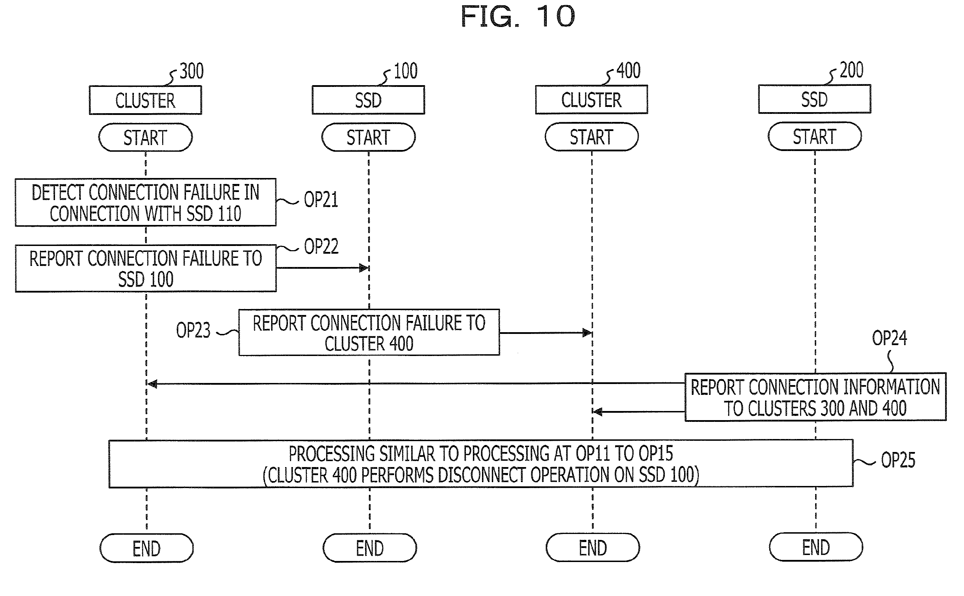

A multi-cluster system 1000 according to a second embodiment and a control method for the multi-cluster system 1000 will now be described with reference to FIG. 10. Since the configuration of the multi-cluster system 1000 according to the second embodiment is substantially the same as the configuration of the multi-cluster system 1000 according to the first embodiment, a description thereof is omitted.

FIG. 10 is a sequence diagram illustrating an example of operation of the multi-cluster system 1000 according to the second embodiment. The processing illustrated in FIG. 10 is performed when the failure-detection reporting circuit 310A1 in the cluster 300 detects a connection failure between the system storage apparatus 100 and the cluster 300.

As illustrated in FIG. 10, it is assumed that the failure-detection reporting circuit 310A1 in the cluster 300 detects a connection failure between the system storage apparatus 100 and the cluster 300 (OP21).

Upon the detection of the connection failure at OP21, the cluster 300 uses the failure-detection reporting circuit 310A1 to report, to the failure-detection reporting circuit 110A1 in the system storage apparatus 100, connection information that includes connection-failure information indicating that a connection failure has occurred between the system storage apparatus 100 and the cluster 300 (OP22).

The system storage apparatus 100 receives the connection information from the cluster 300 and the priority control circuit 130 in the system storage apparatus 100 reports, to the cluster 400, connection information that includes information indicating that a connection failure has occurred between the system storage apparatus 100 and the cluster 300 (OP23).

The system storage apparatus 200 also reports connection information to both of the connected clusters 300 and 400 (OP24). When the system storage apparatus 200 has not detected a connection failure in the connection with the connected clusters 300 and 400, the connection information reported from the system storage apparatus 200 to the clusters 300 and 400 does not include information indicating a connection failure.

After receiving the connection information from the system storage apparatuses 100 and 200 in the processing at OP23 and OP24, the cluster 400 executes processing that is similar to the processing at OP11 to OP15 in the first embodiment (OP25). That is, the cluster 400 performs processing to disconnect the system storage apparatus 100.

According to the multi-cluster system 1000 in the second embodiment and the control method for the multi-cluster system 1000, the system storage apparatus 100 may be disconnected based on the connection information that includes information about a connection failure between the system storage apparatus 100 and the cluster 300, the connection information being reported from the cluster 300, and connection information reported from the interface circuit 410 in the cluster 400.

The multi-cluster system that includes the system storage apparatus 100 and 200 and the clusters 300 and 400 has been described above in the first and second embodiments. However, each of the number of system storage apparatuses and the number of clusters in the multi-cluster system is not limited to two. The disclosed technology may be applied to a multi-cluster system that includes two or more system storage apparatuses and two or more clusters. A multi-cluster system in which each of the clusters 300 and 400 has a plurality of CPUs has been described in the first and second embodiments. However, each of the clusters 300 and 400 may have one CPU. That is, each of the clusters 300 and 400 may have a group of one or more CPUs.

According to the disclosed technology, the cluster 400 receives the connection information from the connected system storage apparatuses 100 and 200, and may execute the processing to disconnect the system storage apparatus 100 from which a connection failure is detected, based on the connection information received from the system storage apparatuses 100 and 200. Accordingly, it is possible to disconnect the system storage apparatus 100 from which the connection failure is detected, while maintaining the state in which the clusters 300 and 400 are coupled with the system storage apparatus 200 from which no connection failure is detected. In addition, since the disconnection of the cluster 300 may be inhibited to suppress a reduction in the number of clusters that execute the processing, the amount of delay in the overall processing of the multi-cluster system 1000 may be reduced.

All examples and conditional language recited herein are intended for pedagogical purposes to aid the reader in understanding the invention and the concepts contributed by the inventor to furthering the art, and are to be construed as being without limitation to such specifically recited examples and conditions, nor does the organization of such examples in the specification relate to a showing of the superiority and inferiority of the invention. Although the embodiments of the present invention have been described in detail, it should be understood that the various changes, substitutions, and alterations could be made hereto without departing from the spirit and scope of the invention.

## Claims

1. A multi-cluster system comprising:
a plurality of computers; and
a plurality of system storage apparatuses each of which is coupled to the plurality of computers;
wherein at least one of the plurality of system storage apparatuses includes
a first circuit that detects a connection information that includes connection-failure information indicating a connection failure in a connection with at least one of the plurality of computers, and
a second circuit that reports the connection information detected by the first circuit to the plurality of computers; and
each of the plurality of computers includes
a third circuit that receives the connection information from each of the plurality of system storage apparatuses, and
a fourth circuit that executes processing to disconnect a system storage apparatus, based on the connection information received by the third circuit.

2. The multi-cluster system according to claim 1, wherein each of the plurality of system storage apparatus further includes a fifth circuit for which a connection flag indicating a state of logical connection with the corresponding computer is set;
when the first circuit detects a connection failure in the connection with the connected computer, each of the plurality of system storage apparatus sets the connection flag to a state that indicates the connection failure; and
when the connection flag is set to a state that indicates a connection failure, the fifth circuit disconnects a corresponding computer from a system storage apparatus.

3. The multi-cluster system according to claim 1, wherein, upon receiving, from at least one of the plurality of system storage apparatuses, connection information indicating that a connection failure between the system storage apparatus and one of the computers has occurred, the one of the computers determines a connection state of the connection between the one of the computers and a system storage apparatus other than the system storage apparatus that transmitted the connection information; and
the computer issues a disconnect instruction to the system storage apparatus that transmitted the connection information based on a result of the determination of the connection state.

4. A multi-cluster system comprising:
a plurality of computers; and
a plurality of system storage apparatuses each of which is coupled to the plurality of computers;
wherein at least one of the plurality of computers includes
a first circuit that detects a connection information that includes connection-failure information indicating a connection failure in a connection with at least one of the plurality of system storage apparatus,
a second circuit that reports the connection information detected by the first circuit to the plurality of system storage apparatuses,
a third circuit that receives the connection information from each of the plurality of system storage apparatuses, and
a fourth circuit that executes processing to disconnect a system storage apparatus, based on the connection information received by the third circuit.

5. The multi-cluster system according to claim 4, wherein each of the plurality of system storage apparatus further includes a fifth circuit for which a connection flag indicating a state of logical connection with the corresponding computer is set;
when the first circuit detects a connection failure in the connection with the connected computer, the connection flag is set to a state that indicates a connection failure; and
when the connection flag is set to a state that indicates a connection failure, the fifth circuit disconnects a corresponding computer from a system storage apparatus.

6. The multi-cluster system according to claim 4, wherein, upon receiving, from at least one of the plurality of system storage apparatuses, connection information indicating that a connection failure between the system storage apparatus and one of the computers has occurred, the computer determines a connection state of the connection between the computer and each of the plurality of system storage apparatuses other than the system storage apparatus that transmitted the connection information; and
the computer issues a disconnect instruction to the system storage apparatus that transmitted the connection information based on a result of the determination of the connection state.

7. An information processing system comprising:
a plurality of information processing apparatuses that perform information processing;
a plurality of system storage apparatuses each of which is coupled to the plurality of information processing apparatuses and are shared by the plurality of information processing apparatuses;
wherein at least one of the plurality of system storage apparatuses includes
a failure detecting circuit that detects presence or absence of a connection failure in a connection with each of the plurality of information processing apparatuses and that transmits, to the plurality of information processing apparatuses, connection information indicating a connection state of the connection between the system storage apparatus and each of the plurality of information processing apparatuses, and
a failure reporting circuit that receives a connection-failure notification from the failure detecting circuit and that instructs the failure detecting circuit to transfer the connection-failure notification to the plurality of information processing apparatuses; and
the information processing apparatus includes
a failure detecting circuit that is coupled to the plurality of system storage apparatuses and that receives, from each of the system storage apparatuses, connection information about the connection between the corresponding system storage apparatus and the information processing apparatus, and
a disconnection processing circuit that determines whether or not the system storage apparatus from which a failure has been detected is to be disconnected, based on the connection information received from each of the plurality of system storage apparatuses by the failure detecting circuit.

8. The information processing system according to claim 7, wherein the system storage apparatus further includes a configuration control circuit for which a connection flag that indicates a state of logical connection with the corresponding information processing apparatus is set;
when the failure detecting circuit detects a connection failure in the connection with the plurality of information processing apparatus, the system storage apparatus sets the connection flag to a state that indicates a connection failure; and
when the connection flag is set to a state indicating a connection state, the configuration control circuit disconnects the corresponding information processing apparatus from the system storage apparatus.

9. The information processing system according to claim 7, wherein, upon receiving, from at least one of the plurality of system storage apparatuses, connection information indicating that a connection failure between the system storage apparatus and one of the information processing apparatuses occurs, the information processing apparatus determines a connection state of the connection between the information processing apparatus and each of the system storage apparatuses other than the system storage apparatus that transmitted the connection information; and
the information processing apparatus issues a disconnect instruction to the system storage apparatus that transmitted the connection information based on a result of the determination of the connection state.
